**Europäisches Patentamt**

**European Patent Office**

**Office européen des brevets**

(19)

(11) **EP 1 241 049 A2**

(12) **EUROPÄISCHE PATENTANMELDUNG**

(43) Veröffentlichungstag:
 **18.09.2002 Patentblatt 2002/38**

(51) Int Cl.⁷: **B60Q 1/12**

(21) Anmeldenummer: **02003963.2**

(22) Anmeldetag: **22.02.2002**

(84) Benannte Vertragsstaaten:
 **AT BE CH CY DE DK ES FI FR GB GR IE IT LI LU MC NL PT SE TR**
 Benannte Erstreckungsstaaten:
 **AL LT LV MK RO SI**

(30) Priorität: **17.03.2001 DE 10112996**

(71) Anmelder:
 • **Bayerische Motoren Werke Aktiengesellschaft
  80809 München (DE)**

• **Pfeiffer, Richard
  81475 München (DE)**

(72) Erfinder:
 • **Hoppstock, Reiner
  80997 München (DE)**
 • **Pfeiffer, Richard
  81475 München (DE)**

(54) **Adaptive Richtmittelsteuerung von Fahrzeugen**

(57)    Die Erfindung betrifft insbesondere eine adaptive Steuerung eines Fahrzeugscheinwerfers (ALC), wobei die horizontale Ausrichtung des Scheinwerfers beim Durchfahren einer Kurve des Fahrweges (7) verändert wird. Nachdem das Fahrzeug (1) beim Durchfahren der Kurve einen Bereich (9) maximaler Krümmung erreicht hat, wird der Scheinwerfer zumindest während eines Teils der weiteren Kurvendurchfahrt so zurückgestellt, daß der Betrag des Verstellwinkels ($\alpha$) oder dessen Sinuswertes schneller verkleinert wird als bei einer Rückstellung proportional zu der momentanen Kurvenkrümmung des Fahrweges (7).

Fig. 1

**Beschreibung**

Die Erfindung betrifft ein Verfahren und eine Vorrichtung zur Steuerung der Ausrichtung von Richtmitteln von Fahrzeugen, insbesondere zur Steuerung der Ausrichtung von Fahrzeugscheinwerfern.

Fahrzeugscheinwerfer weisen Richtmittel auf, mit denen das erzeugte Licht gerichtet von dem Fahrzeug aus abgestrahlt wird. Eine Hauptausleuchtungsrichtung soll dabei so eingestellt sein, daß ein ausreichend großer Abschnitt auf dem Fahrweg vor dem Fahrzeug gut ausgeleuchtet wird.

Es sind ALC (Adaptive Light Control)-Systeme bekannt, die der Ansteuerung von in horizontaler Richtung drehbaren Scheinwerfern in Kraftfahrzeugen dienen. Insbesondere ist es bekannt, bei Kurvendurchfahrten des Fahrzeugs die Frontscheinwerfer horizontal zu verschwenken, um den Weg vor dem Fahrzeug besser auszuleuchten. Zur Erzeugung der Schwenkbewegung ist z. B. pro Scheinwerfer ein Aktuator, etwa ein Elektromotor, vorgesehen. Eine Steuereinrichtung errechnet fortlaufend einen Winkel, um den die Hauptausleuchtungsrichtung der Scheinwerfer in der horizontalen Ebene von der Längsachse des Fahrzeugs abweichen soll. Hierzu erfaßt die Steuereinrichtung für die Steuerung erforderliche Größen, insbesondere die momentane Kurvenkrümmung und/oder die Gierrate des Fahrzeugs (die üblicherweise in rad/s angegeben wird) und die Geschwindigkeit des Fahrzeugs. Aus der Gierrate und der Geschwindigkeit kann wiederum die Kurvenkrümmung bzw. der Kurvenradius bestimmt werden.

Bei den bekannten Systemen wird bei der Einstellung des Winkels zwischen der Hauptausleuchtungsrichtung und der Fahrzeuglängsachse von einer Geradeausstellung der Hauptausleuchtungsrichtung ausgegangen, die bei Geradeausfahrt des Fahrzeugs eingestellt ist. Zur Vereinfachung wird im folgenden davon ausgegangen, daß die Hauptausleuchtungsrichtung in Geradeausstellung mit der Richtung der Fahrzeuglängsachse übereinstimmt.

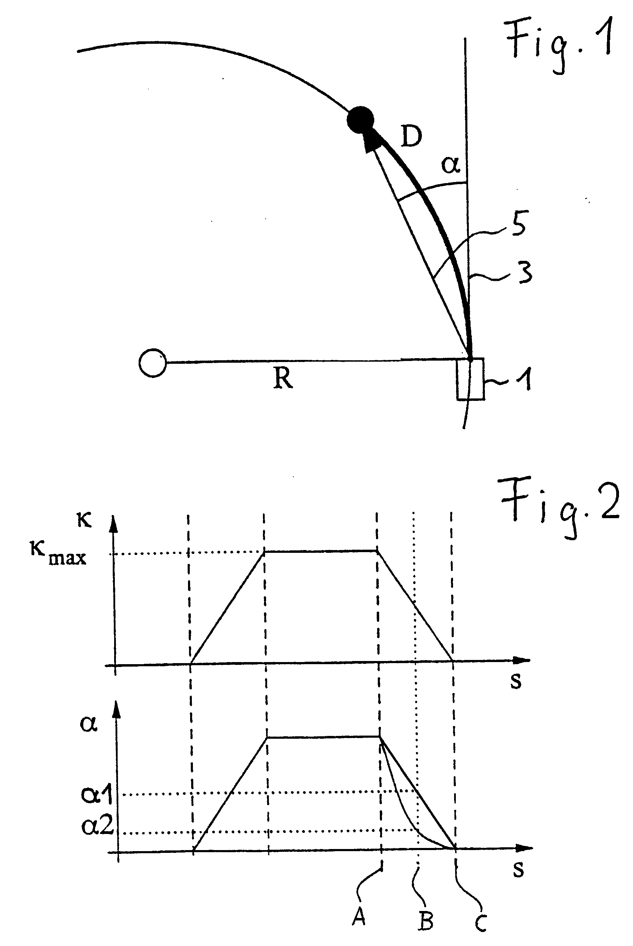

Es ist bekannt, bei einer Kurvendurchfahrt des Fahrzeugs die Hauptausleuchtungsrichtung auf einen Winkel $\alpha$ gegenüber der Längsachse einzustellen, wobei der Winkel $\alpha$ nach der im folgenden beschriebenen Vorschrift berechnet wird. Zur Erläuterung wird dabei auf Fig. 1 der beigefügten Zeichnung Bezug genommen.

In Fig. 1 sind das Fahrzeug 1 und seine Längsachse 3 dargestellt. Das Fahrzeug 1 durchfährt eine Kurve, die hier als Kreisbahn mit einem Kreisradius R dargestellt ist. Der Winkel $\alpha$ wird nun so eingestellt, daß die Hauptausleuchtungsrichtung 5 der Scheinwerfer die Kreisbahn in einer Entfernung D vom Fahrzeug schneidet. Dem entspricht die Berechnungsvorschrift für $\alpha$:

$$\alpha = \arcsin(\kappa \cdot D/2),$$

wobei $\kappa$ die Kurvenkrümmung ist. Sie ist als Kehrwert des Kurvenradius definiert. Wird die Entfernung D - wie in Fig. 1 dargestellt - entlang des Kreisbogens gemessen, vereinfacht sich die Formel zu:

$$\alpha = \kappa \cdot D/2$$

Im allgemeinen Fall weicht die Fahrzeuglängsachse aufgrund von fahrdynamischen Einflüssen von der Tangente an die Kreisbahn ab. Zur Korrektur dieser Abweichung kann der Winkel $\alpha$ um den Wert des Winkels zwischen der Tangente und der Fahrzeuglängsachse korrigiert werden.

Die Kurvenkrümmung $\kappa$ kann z. B. aus dem Lenkradwinkel und/oder aus der Gierrate und der Geschwindigkeit des Fahrzeugs ermittelt werden.

Es ist weiterhin möglich, bei der Berechnung der Krümmung Verfahren anzuwenden, die eine Mehrzahl von Eingangswerten für die Krümmung berücksichtigen, etwa mehrere in einem bestimmten Zeitintervall liegende Eingangswerte. Hierbei können insbesondere Filterverfahren angewendet werden, z.B. Kalman-Filter sowie Filter zur Aufbereitung der Ein- und Ausgangsgrößen.

Nachteilig an der zuvor geschilderten Vorgehensweise ist die Annahme einer über den Kurvenverlauf konstanten Krümmung (Kreisbahn). Bei realen Kurven kommt es daher unter Umständen zu einer schlechten Ausleuchtung des Fahrweges vor dem Fahrzeug.

Ziel der Erfindung ist es, die Steuerung der Ausrichtung eines Richtmittels, insbesondere die Steuerung eines Fahrzeugscheinwerfers, so vorzunehmen, daß beim Durchfahren von realen Kurven ein vor dem Fahrzeug liegender Bereich entlang dem Fahrweg gut mit dem Zielbereich des Richtmittels übereinstimmt.

Reale Kurven weisen üblicherweise einen Bereich auf, der einen maximalen Krümmungswert hat. Vor und nach diesem Bereich ist die Krümmung geringer. Beschränkt sich der Bereich maximaler Krümmung auf eine Stelle der Kurve, spricht man vom Scheitelpunkt.

Bei dem oben beschriebenen bekannten Verfahren ist der Winkel $\alpha$ oder sein Sinuswert proportional zur Krümmung der Kurve. Beim Durchfahren einer realen Kurve ist der Winkel $\alpha$ oder sein Sinuswert folglich zu jedem Zeitpunkt proportional zur momentan gültigen Kurvenkrümmung, d. h. der Scheinwerfer wird bzw. die Scheinwerfer werden proportional zur Kurvenkrümmung in die Hauptausleuchtungsrichtung bei Geradeausfahrt zurückgestellt.

Als Folge davon wird der Fahrweg ungenügend ausgeleuchtet, insbesondere wenn sich das Fahrzeug noch in der Kurve befindet, der durch den oder die Scheinwerfer auszuleuchtende Bereich jedoch schon größtenteils außerhalb der Kurve liegt. Dies liegt daran, daß der Winkel $\alpha$ entsprechend der momentanen Kurvenkrümmung noch einen großen Wert hat, der Straßenverlauf vor dem Fahrzeug jedoch schon geringer oder nicht mehr in die Kurvenrichtung der Kurve (Rechtskurve oder Linkskurve) gekrümmt ist. Vor allem wenn die Kurve in eine Kurve mit entgegengesetzter Kurvenrichtung übergeht (S-Kurve), kann es zu gefährlichen Dunkelbereichen auf dem vorausliegenden Fahrweg kommen.

Es wird daher vorgeschlagen, nachdem das Fahrzeug den Bereich maximaler Krümmung erreicht hat, das zumindest eine Richtmittel, insbesondere den oder die Scheinwerfer, so in die Zielrichtung für Geradeausfahrt zurückzustellen, daß der Winkel $\alpha$ oder dessen Sinuswert während eines Teils der weiteren Kurvendurchfahrt schneller verkleinert wird als es bei einer Rückstellung proportional zu der momentanen Kurvenkrümmung des Fahrweges der Fall wäre.

Eine einfach mit Hilfe einer entsprechenden Steuerungsvorrichtung umzusetzende Vorschrift erhält man, wenn der Winkel $\alpha$ zumindest während dieses Teils der weiteren Kurvendurchfahrt vom Quadrat der momentanen Kurvenkrümmung abhängt. Insbesondere kann das schnellere Zurückstellen beginnen, sobald das Fahrzeug den Bereich oder die Stelle maximaler Krümmung verläßt. Insbesondere kann in dem Kurvenbereich, bei dessen Durchfahrt das Richtmittel schneller zurückgestellt wird, die Krümmung stetig abnehmen.

Der Vorschlag ist nicht darauf beschränkt, daß die Zielrichtung in Geradeausstellung gleich der Richtung der Fahrzeuglängsachse ist. Die Nullrichtung des Winkels $\alpha$ kann auch von der Richtung der Fahrzeuglängsachse abweichen.

Es wird bevorzugt, den Bereich maximaler Krümmung zu detektieren. Dabei wird z.B. die zeitliche Ableitung der Krümmung beobachtet. Während einer Kurvendurchfahrt findet somit im Bereich maximaler Krümmung ein Vorzeichenwechsel der zeitlichen Ableitung statt.

Die schnellere Rückstellung als proportional zur gegenwärtigen Kurvenkrümmung ist insbesondere dann vorteilhaft, wenn zumindest zeitweise keine Informationen über den weiteren, noch vor dem Fahrzeug liegenden Fahrweg zur Verfügung stehen oder verwendet werden sollen. Solche Informationen, die z. B. mit Hilfe eines Navigationssystems oder einer Kamera erhalten werden können, stehen unter Umständen nicht kontinuierlich und/oder nicht immer genau genug zur Verfügung. Auch erhöht die Komplexität technischer Systeme deren Fehleranfälligkeit. Aus den gleichen Gründen ist es vorteilhaft, wenn bei der Bestimmung der Kurvenkrümmung Informationen über den tatsächlichen (auch früheren) Fahrzustand verwendet werden, etwa über die Lenkradstellung.

Andere Fälle, in denen Richtmittel vorkommen, die auf einen vorausliegenden Bereich entlang bzw. auf dem Fahrweg eingestellt werden sollen, bilden die Verwendung einer Kamera, insbesondere einer Infrarot-Kamera, und Vorrichtungen zur Ausstrahlung und/oder zum Empfang bestimmter Meßstrahlung oder Meßsignale, etwa Radar-, Sonar- oder Lidarsysteme zur Abstandsoder Geschwindigkeitssteuerung.

Ausführungsbeispiele und Vorteile der Erfindung werden anhand der beigefügten Zeichnung beschrieben. Die einzelnen Figuren der Zeichnung zeigen:

Fig. 1      eine Darstellung zur Veranschaulichung eines bekannten Verfahrens zur Berechnung des Winkels $\alpha$,

Fig. 2      zwei Diagramme, in denen die Kurvenkrümmung und der Winkel $\alpha$ über dem Fahrzeugweg aufgetragen sind, und

Fig. 3      eine Veranschaulichung der Wirkung des vorgeschlagenen Verfahrens.

Fig. 2 zeigt in dem oberen Diagramm einen typischen Verlauf der Kurvenkrümmung K aufgetragen über dem durch das Fahrzeug zurückgelegten Fahrweg s. Am Anfang der Kurve (linker Bereich des Diagramms) hat die Kurve eine linear mit dem Weg s zunehmende Krümmung K. Die Krümmung K steigt linear bis zu dem Maximalwert $K_{max}$ an. Nach Erreichen des maximalen Krümmungswertes $K_{max}$ wird dieser über den Kurvenbereich maximaler Krümmung beibehalten. Danach fällt die Kurvenkrümmung $\kappa$ wieder linear bis auf den Wert 0 ab.

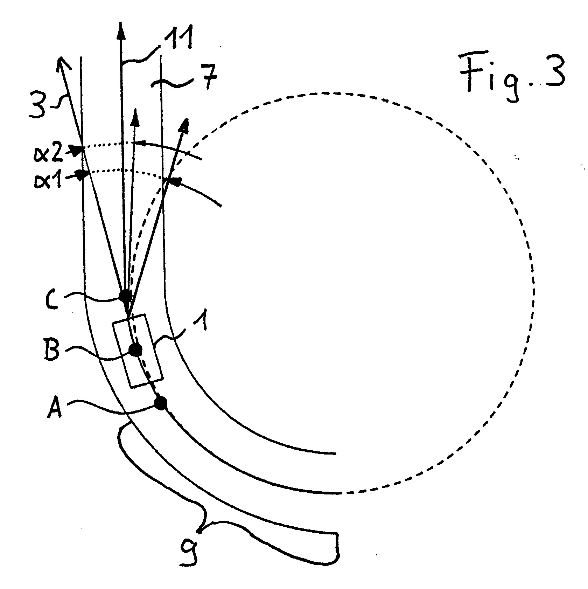

Fig. 3 zeigt einen Fahrweg 11, auf dem sich ein Fahrzeug 1 in die durch eine Pfeilspitze am Fahrweg 11 angedeutete Richtung bewegt. Der Verlauf des Fahrweges 11 entspricht der Kurvenkrümmung $\kappa$ im oberen Diagramm nach Fig. 2, wobei der Fahrweg 11 nur ab dem Beginn des Bereichs maximaler Krümmung eingezeichnet ist. Der Fahrweg 11 verläuft auf einer Fahrbahn 7. Der Bereich maximaler Krümmung ist mit dem Bezugszeichen 9 bezeichnet.

Es sind drei verschiedene Fahrzeugpositionen auf dem Fahrweg 11 bezeichnet, die Position A, die dem Ende des Bereichs 9 entspricht und die das Fahrzeug 1 bereits hinter sich gelassen hat, die Position B, an der sich das Fahrzeug 1 momentan befindet, und die Position C, die dem Ende dem Kurve entspricht.

In Fig. 2, unteres Diagramm, ist der Winkel $\alpha$ über dem Fahrweg s aufgetragen. Bis zu der Position A ist der Winkel $\alpha$ proportional zur Kurvenkrümmung. Ab der Position A sind zwei Verläufe des Winkels $\alpha$ dargestellt. Der lineare Verlauf entspricht dem bekannten Verfahren, das eingangs beschrieben wurde. An der Position B nimmt der Winkel $\alpha$ danach einen Wert $\alpha1$ an. Zur Veranschaulichung der Hauptausleuchtungsrichtung in diesem Fall ist in Fig. 3 ein an dem Fahrzeug 1 ansetzender Pfeil dargestellt, der mit der Fahrzeuglängsachse 3 den Winkel $\alpha1$ einschließt. Es wird deutlich, daß die Hauptausleuchtungsrichtung und der Fahrbahnverlauf vor dem Fahrzeug 1 divergieren.

Es wird vorgeschlagen, den Winkel $\alpha$ ab Erreichen der Position A, d.h. ab dem Verlassen des Bereichs 9 nach einer Vorschrift zu berechnen, die für den Betrag des Winkels $\alpha$ zu kleineren Werten führt als das bekannte Verfahren. Bei einer bevorzugten Ausführungsform wird folgende Vorschrift vorgeschlagen:

$$\alpha = (a\kappa^2 + b\kappa + c) \cdot D/2$$

Dabei sind wiederum $\kappa$ die Kurvenkrümmung und D die Entfernung vom Fahrzeug, in der eine gute Ausleuchtung des vor dem Fahrzeug liegenden Fahrweges vorhanden sein soll. Die Entfernung D kann als zeitlich konstante Größe in die Berechnungsvorschrift einbezogen werden. Bei einer Variante wird die Entfernung D ständig an die momentane Fahrsituation angepaßt.

Die Koeffizienten a, b und c erlauben eine Anpassung der Berechnungsvorschrift an Fahrsituationen und/oder andere Verhältnisse.

Bevorzugtermaßen gehorchen die Koeffizienten folgenden Vorschriften:

$$a = (p-1) / \kappa_{max}$$

$$b = 2-p$$

$$c = 0$$

Dabei sind $K_{max}$ der Maximalwert der Kurvenkrümmung (siehe Fig. 2) und p ein Parameter, der die Einstellung der Wirksamkeit der oben angegebenen Vorschrift zur Berechnung des Winkels $\alpha$ ist. Sinnvoll sind insbesondere Werte für p in dem halboffenen Intervall ]1,2]. Bei Fahrversuchen hat sich der Wert p = 2 als sehr geeignet bewährt. Diesem Fall entspricht in dem unteren Diagramm von Fig. 2 der gekrümmte Verlauf für den Winkel $\alpha$ zwischen den Positionen A und C. An der Position B hat der Winkel $\alpha$ somit den Wert $\alpha2$. Dem entspricht in Fig. 3 der an der Front des Fahrzeugs 1 ansetzende Pfeil, welcher mit der Fahrzeuglängsachse 3 den Winkel $\alpha2$ einschließt. Man erkennt, daß die Fahrbahn 7 vor dem Fahrzeug 1 gut ausgeleuchtet wird. Das Ende des genannten Pfeils, dessen Länge der Entfernung D entspricht, liegt rechts im Zentralbereich der Fahrbahn 7.

Die Vorteile des erfindungsgemäßen Verfahrens lassen sich wie folgt zusammenfassen:

- Straßen werden im Kurvenausgangsbereich gut ausgeleuchtet.
- Der Fahrer wird nicht durch Scheinwerferlicht neben der Straße irritiert.
- S-Kurven können in dem Kurvenübergangsbereich gut ausgeleuchtet werden und der Fahrer erkennt derartige Kurven rechtzeitig.

- Bei Fahrversuchen mit Probanden ergab sich eine deutlich bessere Beurteilung und Akzeptanz durch die Probanden gegenüber bekannten ALC-Steuerverfahren.
- Eine Umrüstung von Fahrzeugsystemen, die bereits eine ALC-Steuerung aufweisen, ist problemlos mit geringen Kosten möglich. Neue Systeme können gegenüber dem bekannten Verfahren ohne Mehrkosten nach dem neuen Verfahren arbeiten.

**Bezugszeichenliste**

| | |
|---|---|
| 1 | Fahrzeug |
| 3 | Längsachse |
| 5 | Hauptausleuchtungsrichtung |
| 7 | Fahrbahn |
| 9 | Kurvenbereich maximaler Krümmung |
| 11 | Fahrweg |
| A, B, C | Positionen auf dem Fahrweg |
| D | Entfernung |
| R | Kurvenradius |
| $\alpha$ | Winkel |
| K | Kurvenkrümmung |

**Patentansprüche**

1. Verfahren zur Steuerung der Ausrichtung zumindest eines Richtmittels eines Fahrzeugs (1), insbesondere zumindest eines Fahrzeugscheinwerfers, wobei

- ein Ausrichtungswinkel ($\alpha$) zwischen einer tatsächlichen Zielrichtung (5) des Richtmittels und einer Zielrichtung für andauernde Geradeausfahrt des Fahrzeugs (1), der in einer zur Ebene des Fahrweges (11) des Fahrzeugs (1) parallelen Ebene bestimmbar ist, abhängig von einem Kurvenverlauf des Fahrweges (11) verändert wird,
- die Kurve einen Bereich (9) maximaler Krümmung aufweist,
- bevor das Fahrzeug (1) beim Durchfahren der Kurve den Bereich (9) erreicht hat, der Ausrichtungswinkel ($\alpha$) verändert wird und,
- zumindest während eines Teils der weiteren Kurvendurchfahrt, nachdem das Fahrzeug (1) den Bereich (9) erreicht hat, das Richtmittel so zurückgestellt wird, daß der Betrag des Ausrichtungswinkels ($\alpha$) oder dessen Sinuswertes schneller verkleinert wird als bei einer Rückstellung proportional zu der momentanen Kurvenkrümmung des Fahrweges.

2. Verfahren nach Anspruch 1, wobei der Ausrichtungswinkel ($\alpha$) oder dessen Sinuswert

während des Teils der weiteren Kurvendurchfahrt oder während der gesamten weiteren Kurvendurchfahrt von der zweiten Potenz der momentanen Kurvenkrümmung des Fahrweges (11) abhängt.

3. Verfahren nach Anspruch 1 oder 2, wobei der Ausrichtungswinkel ($\alpha$) oder dessen Sinuswert während des Teils der weiteren Kurvendurchfahrt oder während der gesamten weiteren Kurvendurchfahrt proportional zu einem Parameter ist, wobei der Parameter jedoch abhängig von der Fahrsituation des Fahrzeugs (1) ist, insbesondere abhängig von der Fahrzeuggeschwindigkeit ist.

4. Verfahren nach einem der Ansprüche 1 bis 3, wobei der Kurvenbereich (9) maximaler Krümmung und/ oder die einer bestimmten Position des Fahrzeugs (1) entsprechende Kurvenkrümmung ohne Verwendung von Information über den weiteren, noch von dem Fahrzeug (1) zurückzulegenden Fahrweg bestimmt wird.

5. Verfahren nach einem der Ansprüche 1 bis 4, wobei der Kurvenbereich (9) maximaler Krümmung und/ oder die einer bestimmten Position des Fahrzeugs (1) entsprechende Kurvenkrümmung durch Auswertung von Information über den tatsächlichen Fahrzustand des Fahrzeugs (1) bestimmt wird.

6. Verfahren nach einem der Ansprüche 1 bis 5, wobei zur Detektion des Kurvenbereichs (9) maximaler Krümmung das Vorzeichen der zeitlichen Ableitung der Kurvenkrümmung beobachtet wird.

7. Vorrichtung zur Steuerung der Ausrichtung zumindest eines Richtmittels eines Fahrzeugs (1), wobei durch eine Stelleinrichtung ein Ausrichtungswinkel ($\alpha$) zwischen einer tatsächlichen Zielrichtung (5) des Richtmittels und einer Zielrichtung für andauernde Geradeausfahrt des Fahrzeugs (1), der in einer zur Ebene des Fahrweges (11) des Fahrzeugs (1) parallelen Ebene bestimmbar ist, abhängig von einem Kurvenverlauf des Fahrweges (7) veränderbar ist, mit

- einer Detektionseinrichtung zum Detektieren, ob das Fahrzeug (1) beim Durchfahren einer Kurve einen Kurvenbereich (9) maximaler Krümmung erreicht hat,
- einer Steuereinrichtung, die über eine Signalverbindung mit der Detektionseinrichtung verbunden ist und die die Ausrichtung des Richtmittels derart steuert, daß,

  • bevor das Fahrzeug (1) beim Durchfahren der Kurve den Kurvenbereich (9) erreicht hat der Ausrichtungswinkel ($\alpha$) verändert wird und,

  • nachdem die Detektionseinrichtung das Erreichen des Kurvenbereichs (9) detektiert und ein Signal an die Steuereinrichtung ausgegeben hat, zumindest während eines Teils der weiteren Kurvendurchfahrt das Richtmittel so zurückgestellt wird, daß der Betrag des Ausrichtungswinkels ($\alpha$) oder dessen Sinuswertes schneller verkleinert wird als bei einer Rückstellung proportional zu der momentanen Kurvenkrümmung des Fahrweges.

Fig.1

Fig.2

Fig. 3